(19) Europäisches Patentamt
European Patent Office
Office européen des brevets

(11) EP 4 366 018 A1

(12) **EUROPEAN PATENT APPLICATION**
published in accordance with Art. 153(4) EPC

(43) Date of publication:
**08.05.2024 Bulletin 2024/19**

(21) Application number: **22878890.7**

(22) Date of filing: **05.10.2022**

(51) International Patent Classification (IPC):
***H01M 10/052*** (2010.01) ***H01M 4/505*** (2010.01)
***H01M 4/525*** (2010.01) ***H01M 10/44*** (2006.01)
***H01M 4/48*** (2010.01) ***H01M 4/38*** (2006.01)

(52) Cooperative Patent Classification (CPC):
**H01M 4/38; H01M 4/48; H01M 4/505; H01M 4/525; H01M 10/052; H01M 10/44;** Y02E 60/10; Y02P 70/50

(86) International application number:
**PCT/KR2022/015005**

(87) International publication number:
**WO 2023/059069 (13.04.2023 Gazette 2023/15)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **05.10.2021 KR 20210131945**

(71) Applicant: **LG Energy Solution, Ltd.**
**Seoul 07335 (KR)**

(72) Inventors:
- **PARK, Byung Chun**
**Daejeon 34122 (KR)**
- **JUNG, Wang Mo**
**Daejeon 34122 (KR)**
- **PARK, Sin Young**
**Daejeon 34122 (KR)**
- **HUR, Hyuck**
**Daejeon 34122 (KR)**
- **KIM, Dong Hwi**
**Daejeon 34122 (KR)**

(74) Representative: **Hoffmann Eitle**
**Patent- und Rechtsanwälte PartmbB**
**Arabellastraße 30**
**81925 München (DE)**

(54) **LITHIUM SECONDARY BATTERY**

(57) The present invention relates to a lithium secondary battery which includes a positive electrode including an overlithiated manganese-based oxide, in which an amount of manganese among total metals excluding lithium is greater than 50 mol% and a ratio (Li/Me) of the number of moles of the lithium to the number of moles of the total metals excluding the lithium is greater than 1, as a positive electrode active material; a negative electrode including a silicon-based negative electrode active material; a separator disposed between the positive electrode and the negative electrode; and an electrolyte, and satisfies Equation (1).

$$\text{Equation (1): } 0.25A \leq B \leq 0.6A$$

In Equation (1), A is a discharge curve area in a voltage range of 2.0 V to 4.6 V of a dQ/dV graph obtained by differentiating a graph of battery discharge capacity Q and voltage V after one cycle which are measured while charging the lithium secondary battery at 0.1 C to 4.6 V and then discharging the lithium secondary battery at 0.1 C to 2.0 V, and B is a discharge curve area in a voltage range of 2.0 V to 3.5 V of the dQ/dV graph.

EP 4 366 018 A1

[FIG.1]

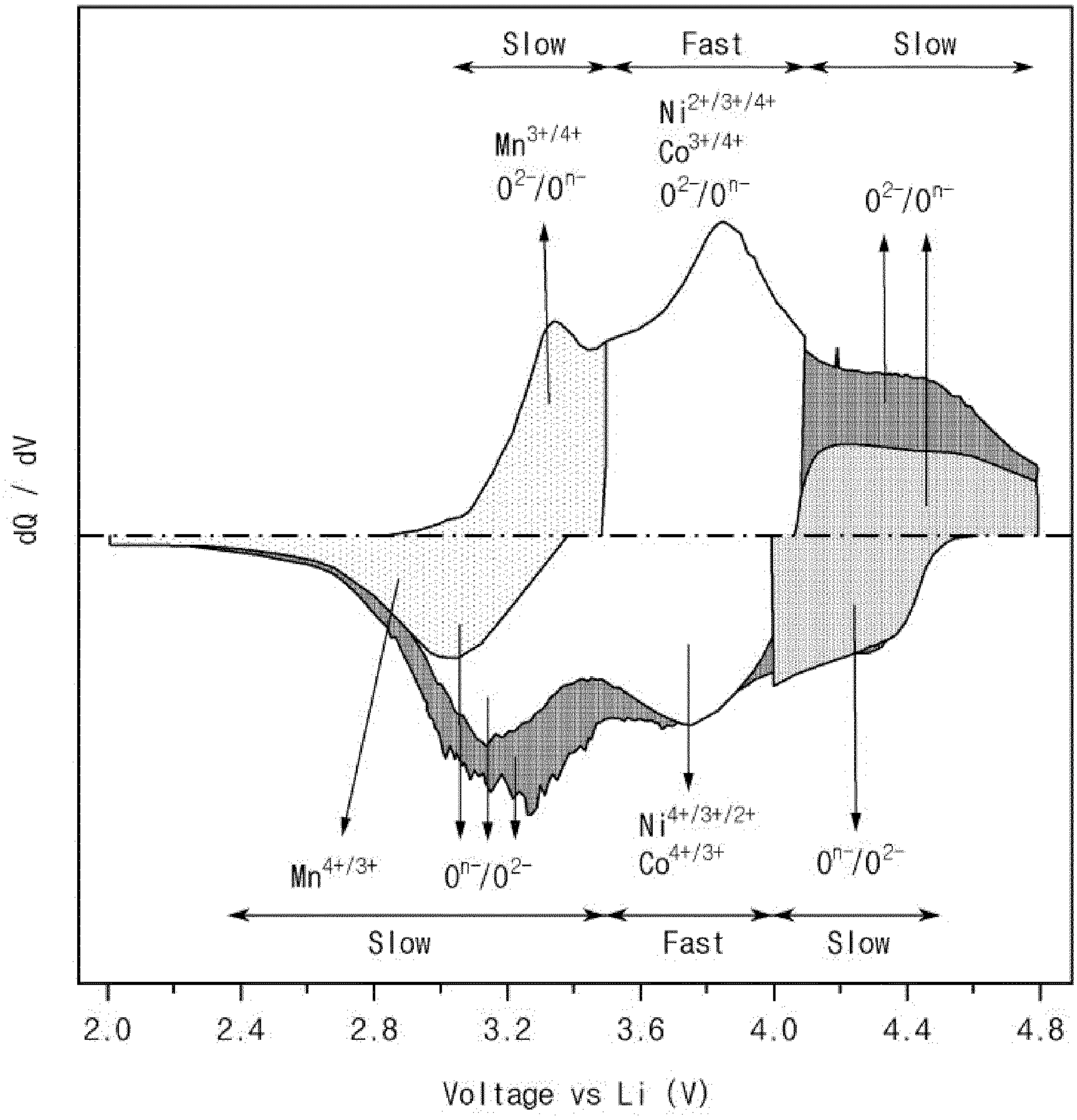
Slow
Fast
Slow
Mn3+/4+
O2-/On-
Ni2+/3+/4+
Co3+/4+
O2-/On-
O2-/On-
dQ / dV
Mn4+/3+
On-/O2-
Ni4+/3+/2+
Co4+/3+
On-/O2-
Slow
Fast
Slow
2.0
2.4
2.8
3.2
3.6
4.0
4.4
4.8
Voltage vs Li (V)

## Description

### TECHNICAL FIELD

This application claims priority from Korean Patent Application Nos. 10-2021-0131945, filed on October 5, 2021, and 10-2022-0127208, filed on October 5, 2022, the disclosures of which are incorporated by reference herein.

The present invention relates to a lithium secondary battery, and more particularly, to a lithium secondary battery including an overlithiated manganese-based oxide, as a positive electrode active material, and a silicon-based negative electrode active material as a negative electrode active material.

### BACKGROUND ART

Recently, interests in energy storage technologies have been increasingly grown, and efforts for research and development of electrochemical devices have been gradually materialized as the application of the energy storage technologies is expanded to the energy of mobile phones, camcorders, notebook PCs, and even to electric vehicles.

There emerges an interest in rechargeable secondary batteries among these electrochemical devices, and, particularly, lithium secondary batteries developed in the early 1990's are spotlighted among the rechargeable secondary batteries because the lithium secondary batteries are advantageous in that they have higher operating voltage and significantly higher energy density.

A lithium secondary battery is generally prepared by a method in which, after an electrode assembly is formed by disposing a separator between a positive electrode, which includes a positive electrode active material formed of a transition metal oxide containing lithium, and a negative electrode including a negative electrode active material capable of storing lithium ions and the electrode assembly is inserted into a battery case, a non-aqueous electrolyte that becomes a medium for transferring the lithium ions is injected thereinto and the battery case is then sealed. The non-aqueous electrolyte is generally composed of a lithium salt and an organic solvent capable of dissolving the lithium salt.

Recently, development of high-voltage secondary batteries operated at high voltage has been actively conducted as demand for secondary batteries having high energy density, such as batteries for electric vehicles, has increased.

Lithium secondary batteries for automobiles, which have been developed to date, mainly use a lithium nickel-based oxide, as a positive electrode active material, and use a carbon-based negative electrode active material, such as graphite, as a negative electrode active material. However, the lithium nickel-based oxide causes problems, such as structural collapse of the positive electrode active material, transition metal dissolution, and gas generation, during high-voltage operation, and, as a result, life characteristics of the battery may be degraded. Also, since the carbon-based negative electrode active material has small capacity and a slow reaction rate with lithium, a secondary battery using the same has a limitation in achieving high energy density.

Thus, there is a need to develop a lithium secondary battery having higher energy density and better life characteristics than a conventional lithium secondary battery.

### DISCLOSURE OF THE INVENTION

### TECHNICAL PROBLEM

An aspect of the present invention provides a lithium secondary battery which includes an overlithiated manganese-based oxide, as a positive electrode active material, and a silicon-based negative electrode active material as a negative electrode active material, and has excellent energy density and life characteristics as it is designed to have a specific behavior during charge/discharge.

### TECHNICAL SOLUTION

The present invention provides a lithium secondary battery which includes a positive electrode including an overlithiated manganese-based oxide, in which an amount of manganese among total metals excluding lithium is greater than 50 mol% and a ratio (Li/Me) of the number of moles of the lithium to the number of moles of the total metals excluding the lithium is greater than 1, as a positive electrode active material; a negative electrode including a silicon-based negative electrode active material; a separator disposed between the positive electrode and the negative electrode; and an electrolyte, and satisfies Equation (1) below.

$$\text{Equation (1): } 0.25A \le B \le 0.6A$$

In Equation (1), A is a discharge curve area [unit: Ah] in a voltage range of 2.0 V to 4.6 V of a dQ/dV graph obtained by differentiating a graph of battery discharge capacity Q and voltage V after one cycle which are measured while charging the lithium secondary battery at 0.1 C to 4.6 V and discharging the lithium secondary battery at 0.1 C to 2.0 V, and B is a discharge curve area [unit: Ah] in a voltage range of 2.0 V to 3.5 V of the dQ/dV graph.

## ADVANTAGEOUS EFFECTS

A lithium secondary battery according to the present invention includes an overlithiated manganese-based oxide, as a positive electrode active material, and includes a silicon-based negative electrode active material as a negative electrode active material. Since the overlithiated manganese-based oxide may be operated at a relatively higher voltage than a lithium nickel-based oxide, capacity characteristics are excellent. Also, since the silicon-based negative electrode active material has theoretical capacity 10 times higher than that of a carbon-based negative electrode active material and has a fast reaction rate with lithium ions, capacity characteristics and rate capability of the lithium secondary battery may be improved when it is used. Thus, the lithium secondary battery of the present invention including the overlithiated manganese-based oxide and the silicon-based negative electrode active material may achieve excellent energy density and rapid charging performance.

Furthermore, in a case in which the overlithiated manganese-based oxide and the silicon-based negative electrode active material are used as in the present invention, an excessive amount of lithium generated from a $Li_2MnO_3$ phase in an activation process may compensate for irreversible capacity of the silicon-based negative electrode active material. Thus, since the lithium secondary battery of the present invention may minimize pre-lithiation or use of a sacrificial positive electrode material for compensating a negative electrode, positive electrode capacity may be maximized and degradation of the negative electrode may be inhibited by suppressing volume expansion of the silicon-based negative electrode active material during charge/discharge processes.

However, with respect to the overlithiated manganese-based oxide, an oxygen-redox reaction occurs during the charge/discharge processes, wherein, if the oxygen-redox reaction occurs excessively, a large amount of gas is generated, and, since collapse of a crystal structure of the active material and internal cracks occur to intensify degradation of a positive electrode, life characteristics may be degraded. Therefore, in the present invention, the degradation of the life characteristics due to the oxygen-redox reaction may be minimized by designing the lithium secondary battery to satisfy a specific discharge behavior (that is, discharge curve area B in a voltage range of 2.0 V to 3.5 V in a dQ/dV graph is 0.25 to 0.6 times discharge curve area A in a voltage range of 2.0 V to 4.6 V) during charge/discharge.

## BRIEF DESCRIPTION OF THE DRAWINGS

FIG. 1 is a dQ/dV graph showing a relationship between voltage-capacity during charge/discharge of a lithium secondary battery in which an overlithiated manganese-based oxide is used.

FIG. 2 is an image showing formation of conductive paths on a surface of a negative electrode active material when single-walled carbon nanotubes are used as a conductive agent.

FIG. 3 is an image showing formation of conductive paths on a surface of a negative electrode active material when multi-walled carbon nanotubes are used as a conductive agent.

## MODE FOR CARRYING OUT THE INVENTION

It will be understood that words or terms used in the specification and claims shall not be interpreted as the meaning defined in commonly used dictionaries, and it will be further understood that the words or terms should be interpreted as having a meaning that is consistent with their meaning in the context of the relevant art and the technical idea of the invention, based on the principle that an inventor may properly define the meaning of the words or terms to best explain the invention.

In the present invention, the expression "primary particle" means a particle unit in which a grain boundary does not exist in appearance when observed by using a scanning electron microscope with a field of view of 5,000 times to 20,000 times. The expression "average particle diameter of the primary particle" means an arithmetic average value of particle diameters which is calculated after measuring the particle diameters of the primary particles observed in a scanning electron microscope image.

In the present invention, the expression "secondary particle" is a particle formed by aggregation of a plurality of primary particles.

The expression "average particle diameter $D_{50}$" in the present invention means a particle size on the basis of 50% in a volume cumulative particle size distribution of measurement target powder (e.g., positive electrode active

material powder or negative electrode active material powder). The average particle diameter $D_{50}$ may be measured by using a laser diffraction method. For example, after dispersing the powder of particles to be measured in a dispersion medium, the dispersion medium is introduced into a commercial laser diffraction particle size measurement instrument (e.g., Microtrac MT 3000) and then irradiated with ultrasonic waves of about 28 kHz at an output of 60 W to obtain a volume cumulative particle size distribution graph, and the average particle diameter $D_{50}$ may then be measured by obtaining a particle size corresponding to 50% of cumulative amount of volume.

The expression "N/P ratio" in the present invention means a percentage of a negative electrode loading amount relative to a positive electrode loading amount, that is, (negative electrode loading amount/positive electrode loading amount) $\times$ 100.

In the present specification, the expression "positive electrode loading amount" means discharge capacity per unit area of a positive electrode (unit: $mAh/cm^2$), and the expression "negative electrode loading amount" means discharge capacity per unit area of a negative electrode (unit: $mAh/cm^2$).

Hereinafter, the present invention will be described in detail.

A lithium secondary battery according to the present invention is characterized in that it includes a positive electrode including an overlithiated manganese-based oxide, in which an amount of manganese among total metals excluding lithium is greater than 50 mol% and a ratio (Li/Me) of the number of moles of the lithium to the number of moles of the total metals excluding the lithium is greater than 1, as a positive electrode active material; a negative electrode including a silicon-based negative electrode active material; a separator disposed between the positive electrode and the negative electrode; and an electrolyte, and satisfies the following Equation (1).

$$\text{Equation (1): } 0.25A \leq B \leq 0.6A$$

In Equation (1), A is a discharge curve area [unit: Ah] in a voltage range of 2.0 V to 4.6 V of a dQ/dV graph obtained by differentiating a graph of battery discharge capacity Q and voltage V after one cycle which are measured while charging the lithium secondary battery at 0.1 C to 4.6 V and then discharging the lithium secondary battery at 0.1 C to 2.0 V, and B is a discharge curve area [unit: Ah] in a voltage range of 2.0 V to 3.5 V of the dQ/dV graph.

The overlithiated manganese-based oxide, in which an amount of manganese among total metals excluding lithium is greater than 50 mol% and a ratio (Li/Me) of the number of moles of the lithium to the number of moles of the total metals excluding the lithium is greater than 1, is a material having a structure in which a layered phase ($LiM'O_2$) and a rock salt phase ($Li_2MnO_3$) are mixed.

With respect to a lithium secondary battery in which the above overlithiated manganese-based oxide is used, it is known that capacity is achieved by a transition metal oxidation reaction and an oxygen-redox reaction during charge/discharge processes. A dQ/dV graph showing a relationship between voltage-capacity during charge/discharge of the lithium secondary battery, in which the overlithiated manganese-based oxide is used, is illustrated in FIG. 1. As illustrated in FIG. 1, since the lithium secondary battery, in which the overlithiated manganese-based oxide is used, additionally achieves capacity through the oxygen-redox reaction in addition to capacity through the transition metal oxidation reaction during discharge, it may achieve higher capacity than a lithium nickel-based oxide which achieves capacity only through the transition metal oxidation reaction. However, in a case in which the oxygen-redox reaction occurs excessively, there is a problem in that life characteristics are rapidly degraded due to structural collapse of the positive electrode active material and gas generation caused by oxygen desorption. Thus, in the present invention, a lithium secondary battery having both excellent life characteristics and high-energy density may be achieved by using the overlithiated manganese-based oxide as a positive electrode active material, but designing the lithium secondary battery so that the oxygen-redox reaction occurs appropriately during charge/discharge processes.

Specifically, the lithium secondary battery according to the present invention is designed to have a discharge behavior that satisfies the following Equation (1).

$$\text{Equation (1): } 0.25A \leq B \leq 0.6A$$

In Equation (1), A is a discharge curve area in a voltage range of 2.0 V to 4.6 V of a dQ/dV graph obtained by differentiating a graph of battery discharge capacity Q and voltage V after one cycle which are measured while charging the lithium secondary battery at 0.1 C to 4.6 V and then discharging the lithium secondary battery at 0.1 C to 2.0 V, B is a discharge curve area in a voltage range of 2.0 V to 3.5 V of the dQ/dV graph, and, in this case, the lithium secondary battery is a battery that has completed an activation process.

As illustrated in FIG. 1, capacity according to the oxygen-redox reaction during discharge of the lithium secondary battery appears in a voltage range of 2.0 V to 3.5 V. Thus, a degree of occurrence of the oxygen-redox reaction may be represented through a ratio of discharge capacity in a voltage range of 2.0 V to 3.5 V to discharge capacity in an

entire voltage range (2.0 V to 4.6 V) of the lithium secondary battery, and it may be expressed as a ratio of the discharge curve area (B) in the voltage range of 2.0 V to 3.5 V to the total discharge curve area (A) of the dQ/dV graph of the lithium secondary battery.

According to the research of the present inventors, it was found that, when the lithium secondary battery had a discharge behavior that satisfied Equation (1), that is, in a case in which the discharge curve area B in the voltage range of 2.0 V to 3.5 V in the dQ/dV graph satisfied a range of 0.25A to 0.6A, both life characteristics and energy density were excellent. Specifically, in a case in which B was greater than 0.6A, since the oxygen-redox reaction occurred excessively, the life characteristics were rapidly degraded, and, in a case in which B was less than 0.25A, it was found that both energy density and life characteristics were degraded.

Preferably, the lithium secondary battery may be designed to satisfy the following Equation (1-1). When the discharge behavior of the lithium secondary battery satisfies the following Equation (1-1), better life characteristics and energy density may be achieved.

$$\text{Equation (1-1): } 0.3A \leq B \leq 0.5A$$

In Equation (1-1), A and B are the same as those defined in Equation (1).

The discharge behavior of the lithium secondary battery, that is, a discharge curve shape of the dQ/dV graph, may change under the influence of an N/P ratio, a negative electrode composition, a positive electrode composition, and activation process conditions. Thus, a lithium secondary battery having a desired discharge behavior may be prepared by designing the battery by appropriately adjusting the above factors.

Since the silicon-based negative electrode active material has theoretical capacity 10 times higher than that of a carbon-based negative electrode active material and has a fast reaction rate with lithium ions, capacity characteristics and rate capability of the lithium secondary battery may be improved when it is used. However, since the silicon-based negative electrode active material has large irreversible capacity, it is necessary to compensate for the irreversible capacity of the negative electrode in order to balance the positive electrode and the negative electrode. Conventionally, in order to compensate for the irreversible capacity of the silicon-based negative electrode active material, a method of performing a pre-lithiation process after preparation of the negative electrode or including a sacrificial positive electrode material for compensating the irreversible capacity of the negative electrode in the positive electrode has been mainly used. If the overlithiated manganese-based oxide undergoes an initial activation process at a high voltage of 4.6 V or higher, a rock salt phase included in the overlithiated manganese-based oxide is activated to generate an excessive amount of lithium ions, and the lithium ions generated in the activation process may be used for compensating for the irreversible capacity of the negative electrode. Thus, in a case in which the overlithiated manganese-based oxide is included as a positive electrode active material and the silicon-based negative electrode active material is included as a negative electrode active material as in the present invention, a balance with the negative electrode including the silicon-based negative electrode active material may be obtained while minimizing a separate compensation material, such as the sacrificial positive electrode material, or the pre-lithiation process by performing a high-voltage activation process at 4.6 V or higher.

Also, in the case that the positive electrode active material including the overlithiated manganese-based oxide and the silicon-based negative electrode active material are used together as in the present invention, since operation is possible at a high voltage of 4.3 V or higher, high energy density may be achieved.

The lithium secondary battery according to the present invention exhibits both excellent energy density and excellent life characteristics. Specifically, the lithium secondary battery according to the present invention may have the number of times reaching 80% lifetime of 560 times or more, preferably 590 times or more, and more preferably 600 times or more, and may have an energy density of 450 Wh/L or more, preferably 470 Wh /L or more, and more preferably 500 Wh/L or more.

Hereinafter, each component of the lithium secondary battery according to the present invention will be described in detail.

## Positive Electrode

The positive electrode according to the present invention includes an overlithiated manganese-based oxide, in which an amount of manganese among total metals excluding lithium is greater than 50 mol% and a ratio (Li/Me) of the number of moles of the lithium to the number of moles of the total metals excluding the lithium is greater than 1, as a positive electrode active material. Specifically, the positive electrode of the present invention includes a positive electrode collector, and a positive electrode active material layer formed on at least one surface of the positive electrode collector, wherein the positive electrode active material layer includes the overlithiated manganese-based oxide in which the amount of manganese among total metals excluding lithium is greater than 50 mol% and the ratio (Li/Me) of the

number of moles of the lithium to the number of moles of the total metals excluding the lithium is greater than 1.

With respect to the overlithiated manganese-based oxide containing excessive lithium, it has a structure in which a layered phase ($LiM'O_2$) and a rock salt phase ($Li_2MnO_3$) are mixed, wherein, since an excessive amount of lithium ions is generated as the rock salt phase is activated in an initial activation process, high capacity may be achieved. Also, since the irreversible capacity of the negative electrode may be compensated by the lithium ions generated in the activation process, there is no need to add a separate compensation material such as the sacrificial positive electrode material, and thus, positive electrode capacity may be increased.

Preferably, the overlithiated manganese-based oxide may be represented by [Formula 1] below.

[Formula 1] $Li_aNi_bCo_cMn_dM_cO_2$

In Formula 1, M is at least one selected from the group consisting of aluminum (Al), boron (B), cobalt (Co), tungsten (W), magnesium (Mg), vanadium (V), titanium (Ti), zinc (Zn), gallium (Ga), indium (In), ruthenium (Ru), niobium (Nb), tin (Sn), strontium (Sr), and zirconium (Zr).

a is a molar ratio of lithium (Li) in the overlithiated manganese-based oxide, wherein a may satisfy $1 < a$, $1.1 \le a \le 1.5$, or $1.1 \le a \le 1.3$. When a satisfies the above range, the irreversible capacity of the silicon-based negative electrode active material may be sufficiently compensated, and high capacity characteristics may be achieved.

b is a molar ratio of nickel (Ni) in the overlithiated manganese-based oxide, wherein b may satisfy $0 \le b \le 0.5$, $0.1 \le b \le 0.4$, or $0.2 \le b \le 0.4$.

c is a molar ratio of cobalt (Co) in the overlithiated manganese-based oxide, wherein c may satisfy $0 \le c \le 0.1$, $0 \le c \le 0.08$, or $0 \le c \le 0.05$. In a case in which c is greater than 0.1, since it is difficult to secure high capacity and gas generation and degradation of the positive electrode active material may be intensified, the life characteristics may be degraded.

d is a molar ratio of manganese (Mn) in the overlithiated manganese-based oxide, wherein d may satisfy $0.5 \le d < 1.0$, $0.50 \le d \le 0.80$, or $0.50 \le d \le 0.70$. In a case in which d is less than 0.5, since a ratio of the rock salt phase is excessively small, an effect of capacity improvement and irreversible compensation of the negative electrode is insignificant.

e is a molar ratio of doping element M in the overlithiated manganese-based oxide, wherein e may satisfy $0 \le e \le 0.2$, $0 \le e \le 0.1$, or $0 \le e \le 0.05$. An excessively large amount of the doping element may adversely affect capacity of the active material.

In the overlithiated manganese-based oxide, the ratio (Li/Me) of the number of moles of Li to the number of moles of the total metals excluding Li may be in a range of 1.2 to 1.5, 1.25 to 1.5, or 1.25 to 1.4. When the Li/Me ratio satisfies the above range, rate capability and capacity characteristics are excellent. If the Li/Me ratio is excessively high, electrical conductivity is decreased and the rock salt phase ($Li_2MnO_3$) is increased to accelerate degradation rate, and, if the Li/Me ratio is excessively low, an energy density improvement effect is insignificant.

A composition of the overlithiated manganese-based oxide may be represented by [Formula 2] below.

[Formula 2] $X\ Li_2MnO_3 \cdot (1-X)Li[Ni_{1-y-z-w}Mn_yCo_zM_w]O_2$

In [Formula 2], M may be at least one selected from the group consisting of Al, B, Co, W, Mg, V, Ti, Zn, Ga, In, Ru, Nb, Sn, Sr, and Zr.

X represents a ratio of the $Li_2MnO_3$ phase in the overlithiated manganese-based oxide, wherein X may satisfy $0.2 \le X \le 0.5$, $0.25 \le X \le 0.5$, or $0.25 \le X \le 0.4$. When the ratio of the $Li_2MnO_3$ phase in the overlithiated manganese-based oxide satisfies the above range, the irreversible capacity of the silicon-based negative electrode active material may be sufficiently compensated, and high capacity characteristics may be achieved.

y is a molar ratio of Mn in the $LiM'O_2$ layered phase, wherein y may satisfy $0.4 \le y < 1$, $0.4 \le y \le 0.8$, or $0.4 \le y \le 0.7$.

z is a molar ratio of Co in the $LiM'O_2$ layered phase, wherein z may satisfy $0 \le z \le 0.1$, $0 \le z \le 0.08$, or $0 \le z \le 0.05$. In a case in which z is greater than 0.1, since the gas generation and the degradation of the positive electrode active material may be intensified, the life characteristics may be degraded.

w is a molar ratio of doping element M in the $LiM'O_2$ layered phase, wherein w may satisfy $0 \le w \le 0.2$, $0 \le w \le 0.1$, or $0 \le w \le 0.05$.

The positive electrode active material according to the present invention may further include a coating layer on a surface of the overlithiated manganese-based oxide, if necessary. In a case in which the positive electrode active material includes the coating layer, since a contact between the overlithiated manganese-based oxide and the electrolyte is suppressed by the coating layer, an electrolyte solution side reaction is reduced, and, as a result, an effect of improving the life characteristics may be obtained.

The coating layer may include a coating element M1, wherein the coating element M1, for example, may be at least one selected from the group consisting of Al, B, Co, W, Mg, V, Ti, Zn, Ga, In, Ru, Nb, Sn, Sr, and Zr, may be

preferably Al, Co, Nb, W, and a combination thereof, and may be more preferably Al, Co, and a combination thereof. Two or more kinds of the coating element $M^1$ may be included, and, for example, Al and Co may be included.

The coating element may be present in an oxide form, that is, $M^1Oz$ ($1 \leq z \leq 4$) in the coating layer.

The coating layer may be formed through a method such as dry coating, wet coating, chemical vapor deposition (CVD), physical vapor deposition (PVD), and atomic layer deposition (ALD). Among them, it is desirable that the coating layer is formed through the atomic layer deposition method in terms of forming an area of the coating layer widely.

The area of the coating layer formed may be in a range of 10% to 100%, preferably 30% to 100%, and more preferably 50% to 100% based on a total surface area of the overlithiated manganese-based oxide particle. When the area of the coating layer formed satisfies the above range, the effect of improving the life characteristics is excellent.

The positive electrode active material according to the present invention may be in the form of a secondary particle in which a plurality of primary particles are aggregated, wherein the secondary particle may have an average particle diameter ($D_{50}$) of 2 $\mu$m to 10 $\mu$m, preferably 2 $\mu$m to 8 $\mu$m, and more preferably 4 $\mu$m to 8 $\mu$m. When the $D_{50}$ of the positive electrode active material satisfies the above range, electrode density may be achieved excellently, and degradation of capacity characteristics and rate capability may be minimized.

Also, the positive electrode active material may have a Brunauer-Emmett-Teller (BET) specific surface area of 1 $m^2/g$ to 10 $m^2/g$, 3 $m^2/g$ to 8 $m^2/g$, or 4 $m^2/g$ to 6 $m^2/g$. If the BET specific surface area of the positive electrode active material is excessively small, it is difficult to achieve sufficient capacity due to an insufficient reaction area with the electrolyte, and, if the BET specific surface area of the positive electrode active material is excessively large, since moisture absorption is fast and a side reaction with the electrolyte is accelerated, it is difficult to secure the life characteristics.

Furthermore, it is desirable that the positive electrode according to the present invention has an initial irreversible capacity of 5% to 70%, 5% to 50%, or about 5% to about 30%. After a half cell is prepared by using the positive electrode and a lithium counter electrode, the initial irreversible capacity of the positive electrode is a percentage of discharge capacity when charging and discharging the half cell in a voltage range of 2.5 V to 4.4 V relative to charge capacity when charging the half cell at a high voltage of 4.6 V or higher, wherein it is a value measured on the basis of 0.1 C. When the initial irreversible capacity of the positive electrode satisfies the above range, the irreversible capacity of the silicon-based negative electrode active material may be sufficiently compensated without using the separate compensation material such as the sacrificial positive electrode material.

The overlithiated manganese-based oxide may be prepared by mixing a transition metal precursor and a lithium raw material and then sintering the mixture.

The lithium raw material, for example, may include lithium-containing carbonates (e.g., lithium carbonate, etc.), hydrates (e.g., lithium hydroxide hydrate ($LiOH \cdot H_2O$), etc.), hydroxides (e.g., lithium hydroxide, etc.), nitrates (e.g., lithium nitrate (LiNOs), etc.), or chlorides (e.g., lithium chloride (LiCl), etc.), and any one thereof or a mixture of two or more may be used.

The transition metal precursor may be in a form of a hydroxide, oxide or carbonate. In a case in which the precursor in the form of a carbonate is used, it is more preferable in that a positive electrode active material having a relatively high specific surface area may be prepared.

The transition metal precursor may be prepared through a co-precipitation process. For example, after a metal solution is prepared by dissolving each transition metal-containing raw material in a solvent, the transition metal precursor may be prepared by a method of mixing the metal solution, an ammonium cationic complexing agent, and a basic compound and then performing a co-precipitation reaction. Also, an oxidizing agent or oxygen gas may be further added during the co-precipitation reaction, if necessary.

In this case, the transition metal-containing raw material may be acetic acid salts, carbonates, nitrates, sulfates, halides, or sulfides of each transition metal. Specifically, the transition metal-containing raw material may be NiO, $NiCO_3 \cdot Ni(OH)_2 \cdot 4H_2O$, $NiC_2O_2 \cdot 2H_2O$, $Ni(NO_3)_2 \cdot 6H_2O$, $NiSO_4$, $NiSO_4 \cdot 6H_2O$, $Mn_2O_3$, $MnO_2$, $Mn_3O_4$, MnCOs, $Mn(NO_3)_2$, $MnSO_4 \cdot H_2O$, manganese acetate, manganese halide.

The ammonium cationic complexing agent may be at least one selected from the group consisting of $NH_4OH$, $(NH_4)_2SO_4$, $NH_4NO_3$, $NH_4Cl$, $CH_3COONH_4$, and $(NH_4)_2CO_3$.

The basic compound may be at least one selected from the group consisting of NaOH, $Na_2CO_3$, KOH, and $Ca(OH)_2$. The form of the precursor may vary depending on a type of the basic compound used. For example, in a case in which NaOH is used as the basic compound, a precursor in the form of a hydroxide may be obtained, and, in a case in which $Na_2CO_3$ is used as the basic compound, a precursor in the form of a carbonate may be obtained. Also, in a case in which the basic compound and the oxidizing agent are used together, a precursor in the form of an oxide may be obtained.

The transition metal precursor and the lithium source material may be mixed in amounts such that a molar ratio of total transition metals (Ni+Co+Mn):Li is in a range of 1:1.05 to 1:2, preferably 1:1.1 to 1:1.8, and more preferably 1:1.25 to 1:1.8.

The sintering may be performed at a temperature of 600°C to 1,000°C or 700°C to 950°C, and sintering time

may be in a range of 5 hours to 30 hours or 5 hours to 20 hours. Also, sintering atmosphere may be an air atmosphere or an oxygen atmosphere, and, for example, may be an atmosphere containing 20 vol% to 100 vol% of oxygen.

The positive electrode active material layer may further include a conductive agent and a binder in addition to the positive electrode active material.

The conductive agent, for example, may include spherical or flaky graphite; a carbon-based material such as carbon black, acetylene black, Ketjen black, channel black, furnace black, lamp black, thermal black, carbon fibers, single-walled carbon nanotubes, and multi-walled carbon nanotubes; powder or fibers of metal such as copper, nickel, aluminum, and silver; conductive whiskers such as zinc oxide whiskers and potassium titanate whiskers; conductive metal oxides such as titanium oxide; or conductive polymers such as polyphenylene derivatives, and any one thereof or a mixture of two or more thereof may be used. The conductive agent may be included in an amount of 0.1 wt% to 20 wt%, 1 wt% to 20 wt%, or 1 wt% to 10 wt% based on a total weight of the positive electrode active material layer.

Also, the binder, for example, may include polyvinylidene fluoride (PVDF), polyvinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene monomer rubber (EPDM rubber), a sulfonated EPDM, a styrene-butadiene rubber (SBR), a fluorine rubber, or various copolymers thereof, and any one thereof or a mixture of two or more thereof may be used. The binder may be included in an amount of 1 wt% to 20 wt%, 2 wt% to 20 wt%, or 2 wt% to 10 wt% based on the total weight of the positive electrode active material layer.

The positive electrode according to the present invention may have an electrode density of 2.5 g/cc to 3.8 g/cc, 2.5 g/cc to 3.5 g/cc, or about 3.0 g/cc to about 3.3 g/cc. When the electrode density of the positive electrode satisfies the above range, high energy density may be achieved.

As described above, the lithium secondary battery of the present invention, in which the overlithiated manganese-based oxide is used as the positive electrode active material, may achieve high capacity characteristics because the cell may be stably operated even when a charge end voltage is set as high as 4.3 V to 4.5 V during battery operation.

## Negative Electrode

The negative electrode according to the present invention includes a silicon-based negative electrode active material as a negative electrode active material. Specifically, the negative electrode according to the present invention includes a negative electrode collector and a negative electrode active material layer formed on at least one surface of the negative electrode collector, wherein the negative electrode active material layer may include the silicon-based negative electrode active material as the negative electrode active material.

Since the silicon-based negative electrode active material has higher theoretical capacity than a carbon-based negative electrode active material and has a fast reaction rate with lithium ions, energy density and rapid charging performance may be improved when the silicon-based negative electrode active material is included in the negative electrode. However, since the silicon-based negative electrode active material has large irreversible capacity and has a large volume expansion during charge and discharge, it is inferior in terms of life characteristics. Particularly, in a case in which it is used in combination with the overlithiated manganese-based oxide in which the oxygen-redox reaction occurs, there is a problem in that the degradation of the life characteristics is more intensified. However, as described above, in the case that the discharge behavior of the lithium secondary battery satisfies Equation (1), excellent energy density and rapid charging performance may be achieved while minimizing the degradation of the life characteristics due to the oxygen-redox reaction.

The silicon-based negative electrode active material, for example, may be silicon (Si), $SiO_w$ (where, $0 \le w \le 2$), a Si-C composite, a Si-$M^a$ alloy ($M^a$ is at least one selected from the group consisting of Al, Sn, Mg, copper (Cu), iron (Fe), lead (Pb), Zn, Mn, chromium (Cr), Ti, and Ni), or a combination thereof.

The silicon-based negative electrode active material may be doped with $M^b$ metal, if necessary, and, in this case, the $M^b$ metal may be a Group 1 alkali metal element and/or a Group 2 alkaline earth metal element, and, for example, may be Li or Mg. Specifically, the silicon-based negative electrode active material may be Si, $SiO_w$ (where, $0 < w \le 2$), or a Si-C composite which is doped with the $M^b$ metal. With respect to the metal-doped silicon-based negative electrode active material, since capacity of the active material is reduced due to the doping element, but it has high efficiency, high energy density may be achieved.

Also, the silicon-based negative electrode active material may further include a carbon coating layer on a surface of the particle, if necessary. In this case, an amount of carbon coating may be 20 wt% or less, preferably, 0.1 wt% to 20 wt% based on a total weight of the silicon-based negative electrode active material. Since electrical conductivity of a silicon surface is improved when the carbon coating is applied, uniformity of a solid electrolyte interphase (SEI) layer is improved and there is an effect of improving initial efficiency and life characteristics.

The carbon coating layer may be formed through a method such as dry coating, wet coating, chemical vapor deposition (CVD), physical vapor deposition (PVD), and atomic layer deposition (ALD).

It is desirable that the silicon-based negative electrode active material has a capacity of 1,000 mAh/g to 4,000 mAh/g, preferably 1,000 mAh/g to 3,800 mAh/g, and more preferably 1,200 mAh/g to 3,800 mAh/g. If the silicon-based negative electrode active material that satisfies the above capacity range is used, high capacity characteristics may be achieved.

Also, the silicon-based negative electrode active material may have an initial efficiency of 60% to 95%, 70% to 95%, and preferably 75% to 95%. After a half-cell is prepared with a negative electrode using 100% of the silicon-based negative electrode active material, as the negative electrode active material, and a lithium counter electrode, the initial efficiency of the silicon-based negative electrode active material means a percentage of discharge capacity relative to charge capacity which are measured by charging and discharging the half-cell at a 0.1C-rate between 0.01 V and 1.5 V. When the initial efficiency of the silicon-based negative electrode active material satisfies the above range, lithium provided from the positive electrode may be reversibly used, and excellent rapid charging performance may be achieved.

Furthermore, with respect to a particle size of the silicon-based negative electrode active material, $D_{50}$ may be in a range of 3 $\mu$m to 8 $\mu$m, preferably, 4 $\mu$m to 7 $\mu$m, and $D_{min}$ to $D_{max}$ may be in a range of 0.01 $\mu$m to 30 $\mu$m, preferably 0.01 $\mu$m to 20 $\mu$m, and more preferably 0.5 $\mu$m to 15 $\mu$m. When the particle size of the silicon-based negative electrode active material satisfies the above range, sufficient electrode density may be secured by the silicon-based negative electrode active material alone or a mixture of the silicon-based negative electrode active material with a carbon-based negative electrode active material.

Also, the negative electrode may further include a carbon-based negative electrode active material as the negative electrode active material, if necessary. The carbon-based negative electrode active material, for example, may be artificial graphite, natural graphite, graphitized carbon fibers, amorphous carbon, soft carbon, or hard carbon, but is not limited thereto.

The silicon-based negative electrode active material may be included in an amount of 1 wt% to 100 wt%, 1 wt% to 50 wt%, 1 wt% to 30 wt%, 1 wt% to 15 wt%, 10 wt% to 70 wt%, or 10 wt% to 50 wt% based on a total weight of the negative electrode active material.

The carbon-based negative electrode active material may be included in an amount of 0 wt% to 99 wt%, 50 wt% to 99 wt%, 70 wt% to 99 wt%, 85 wt% to 99 wt%, 30 wt% to 90 wt%, or 50 wt% to 90 wt% based on the total weight of the negative electrode active material.

In the lithium secondary battery of the present invention, it is desirable to configure the N/P ratio, which is a percentage of the negative electrode loading amount relative to the positive electrode loading amount, differently according to a type of the negative electrode active material used.

For example, in a case in which a mixture of $SiO_w$ and the carbon-based negative electrode active material is used as the negative electrode active material, the N/P ratio may be in a range of 100% to 150%, preferably 100% to 140%, and more preferably about 100% to about 120%. In a case in which negative electrode discharge capacity relative to positive electrode discharge capacity is outside the above range, since the positive electrode and the negative electrode are out of balance, the life characteristics may be degraded or lithium precipitation may occur.

Also, in a case in which 100% of Si is used as the negative electrode active material, the N/P ratio may be in a range of 150% to 300%, preferably 160% to 300%, and more preferably about 180% to about 300%. In a case in which negative electrode discharge capacity relative to positive electrode discharge capacity is outside the above range, since the positive electrode and the negative electrode are out of balance, the life characteristics may be degraded or the lithium precipitation may occur.

The negative electrode active material layer may further include a conductive agent and a binder, if necessary.

The conductive agent, for example, may include spherical or flaky graphite; a carbon-based material such as carbon black, acetylene black, Ketjen black, channel black, furnace black, lamp black, thermal black, carbon fibers, single-walled carbon nanotubes, and multi-walled carbon nanotubes; powder or fibers of metal such as copper, nickel, aluminum, and silver; conductive whiskers such as zinc oxide whiskers and potassium titanate whiskers; conductive metal oxides such as titanium oxide; or conductive polymers such as polyphenylene derivatives, and any one thereof or a mixture of two or more thereof may be used. The conductive agent may be included in an amount of 0.1 wt% to 30 wt%, 0.1 wt% to 20 wt%, or 0.1 wt% to 10 wt% based on a total weight of the negative electrode active material layer.

Preferably, single-walled carbon nanotubes may be used as the conductive agent. In a case in which the carbon nanotubes are used as the conductive agent, since a conductive path is widely formed, an effect of increasing durability and reducing resistance may be obtained, and, accordingly, excellent life characteristics may be achieved.

An image showing formation of conductive paths on a surface of the negative electrode active material when the single-walled carbon nanotubes are used as the conductive agent is illustrated in FIG. 2, and an image showing formation of conductive paths on a surface of the negative electrode active material when multi-walled carbon nanotubes are used as the conductive agent is illustrated in FIG. 3.

As illustrated in FIGS. 2 and 3, when the single-walled carbon nanotubes are used as the conductive agent, the conductive paths are evenly formed on the surface of the negative electrode active material, and, as a result, an effect of improving cycle characteristics may be obtained.

Also, the binder, for example, may include polyvinylidene fluoride (PVDF), polyvinylidene fluoride-hexafluoropropylene copolymer (PVDF-co-HFP), polyvinyl alcohol, polyacrylic acid, polyacrylamide, polyacrylonitrile, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene monomer rubber (EPDM rubber), a sulfonated EPDM, a styrene-butadiene rubber (SBR), a fluorine rubber, or various copolymers thereof, and any one thereof or a mixture of two or more thereof may be used. The binder may be included in an amount of 1 wt% to 20 wt%, 2 wt% to 20 wt%, or 2 wt% to 10 wt% based on the total weight of the negative electrode active material layer.

In the negative electrode, the negative electrode active material layer may be a single layer or may have a multilayer structure composed of two or more layers. For example, the negative electrode may include a first negative electrode active material layer formed on the negative electrode collector, and a second negative electrode active material layer formed on the first negative electrode active material.

In a case in which the negative electrode active material layer has a multilayer structure composed of two or more layers, each layer may have different types and/or amounts of the negative electrode active material, the binder, and/or the conductive agent.

For example, the first negative electrode active material layer (lower layer) may be formed such that the amount of the carbon-based negative electrode active material among the total negative electrode active materials is higher than that of the second negative electrode active material layer (upper layer), the second negative electrode active material layer may be formed such that the amount of the silicon-based negative electrode active material among the total negative electrode active materials is higher than that of the first negative electrode active material layer, or the second negative electrode active material layer (upper layer) may be formed such that the amount of the conductive agent is higher than that of the first negative electrode active material layer (lower layer).

Performance characteristics of the battery may be improved by forming the negative electrode active material layer in a multilayer structure and varying a composition of each layer as described above. For example, in a case in which the upper layer is formed such that the amount of the conductive agent or the silicon-based negative electrode active material is higher than that in the lower layer, an effect of improving the rapid charging performance may be obtained.

The negative electrode active material layer may have a porosity of 20% to 70% or 20% to 50%. If the porosity of the negative electrode active material layer is excessively small, electrolyte solution impregnability may be reduced to reduce lithium mobility, and, if the porosity is excessively large, the energy density may be reduced.

## Separator

The separator in the lithium secondary battery of the present invention separates the negative electrode and the positive electrode and provides a movement path of lithium ions, wherein any separator may be used as the separator without particular limitation as long as it is typically used in a lithium secondary battery, and particularly, a separator having high moisture-retention ability for an electrolyte as well as low resistance to the transfer of electrolyte ions may be used. Specifically, a porous polymer film, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. Also, a typical porous nonwoven fabric, for example, a nonwoven fabric formed of high melting point glass fibers or polyethylene terephthalate fibers may be used. Furthermore, a coated separator including a ceramic component or a polymer material may be used to secure heat resistance or mechanical strength, and the separator having a single layer or multilayer structure may be optionally used.

## Electrolyte

Also, the electrolyte used in the present invention may include an organic liquid electrolyte, an inorganic liquid electrolyte, a solid polymer electrolyte, a gel-type polymer electrolyte, a solid inorganic electrolyte, or a molten-type inorganic electrolyte which may be used in the preparation of the lithium secondary battery, but the present invention is not limited thereto.

Specifically, the electrolyte may include an organic solvent and a lithium salt.

Any organic solvent may be used as the organic solvent without particular limitation so long as it may function as a medium through which ions involved in an electrochemical reaction of the battery may move. Specifically, an ester-based solvent such as methyl acetate, ethyl acetate, γ-butyrolactone, and ε-caprolactone; an ether-based solvent such as dibutyl ether or tetrahydrofuran; a ketone-based solvent such as cyclohexanone; an aromatic hydrocarbon-based solvent such as benzene and fluorobenzene; or a carbonate-based solvent such as dimethyl carbonate (DMC), diethyl carbonate (DEC), methylethyl carbonate (MEC), ethylmethyl carbonate (EMC), ethylene carbonate (EC), and propylene carbonate (PC); an alcohol-based solvent such as ethyl alcohol and isopropyl alcohol; nitriles such as R-CN (where R is a linear, branched, or cyclic C2-C20 hydrocarbon group and may include a double-bond, an aromatic ring or ether

bond); amides such as dimethylformamide; dioxolanes such as 1,3-dioxolane; or sulfolanes may be used as the organic solvent.

The lithium salt may be used without particular limitation as long as it is a compound capable of providing lithium ions used in the lithium secondary battery. Specifically, an anion of the lithium salt may be at least one selected from the group consisting of $F^-$, $Cl^-$, $Br^-$, $I^-$, $NO_3^-$, $N(CN)_2^-$, $BF_4^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, SCN-, and $(CF_3CF_2SO_2)_2N$-, and $LiPF_6$, $LiN(FSO_2)_2$, $LiClO_4$, $LiAsF_6$, $LiBF_4$, $LiSbF_6$, $LiAlO_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$, LiCl, LiI, or $LiB(C_2O_4)_2$ may be used as the lithium salt. The lithium salt may be used in a concentration range of 0.1 M to 5.0 M.

Also, in order to improve the life characteristics of the battery, suppress the reduction in capacity, and inhibit the gas generation, an additive may be included in the electrolyte. As the additive, various additives used in the art, for example, fluoroethylene carbonate (FEC), vinylene carbonate (VC), vinylethylene carbonate (VEC), ethylene sulfate (ESa), lithium difluorophosphate ($LiPO_2F_2$), lithium bisoxalato borate (LiBOB), lithium tetrafluoro borate ($LiBF_4$), lithium difluorooxalato borate (LiDFOB), lithium difluorobisoxalatophosphate (LiDFBP), lithium tetrafluorooxalato phosphate (LiTFOP), lithium methyl sulfate (LiMS), lithium ethyl sulfate (LiES) propanesultone (PS), propensultone (PRS), succinonitrile (SN), adiponitrile (AND), 1,3,6-hexanetricarbonitrile (HTCN), 1,4-dicyano-2-butene (DCB), fluorobenzene (FB), ethyl di(pro-2-y-1-yl)phosphate (EDP), 5-methyl-5-propargyloxylcarbonyl-1,3-dioxane-2-one (MPOD), a compound represented by the following Formula A (e.g., cyanoethylpolyvinyl alcohol, PVA-CN), a compound represented by the following Formula B (e.g., heptafluorobutyrcyanoethylpolyvinyl alcohol, PF-PVA-CN), a compound represented by the following Formula C (e.g., propargyl 1H-imidazole-1-carboxylate, PAC), and/or a compound represented by the following Formula D (e.g., arylimidazole such as $C_6H_8N_2$) may be used.

[Formula A]

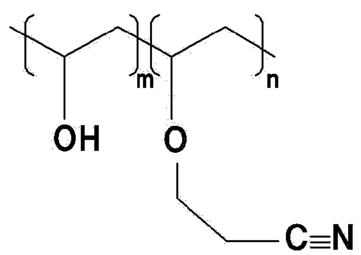

In Formula A, n and m are each independently an integer of 1 to 100.

[Formula B]

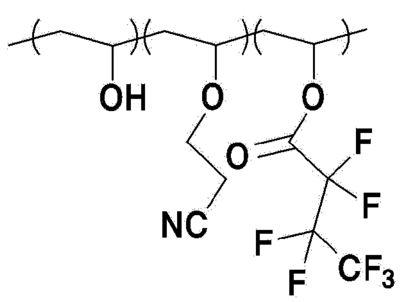

[Formula C]

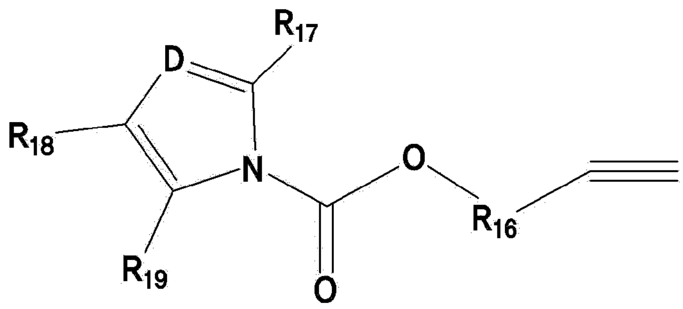

In Formula C, $R_{16}$ is a linear or non-linear alkylene group having 1 to 3 carbon atoms, $R_{17}$ to $R_{19}$ are each independently at least one selected from the group consisting of hydrogen, an alkyl group having 1 to 3 carbon atoms, and a cyano group (-CN), and D is CH, or N.

[Formula D]

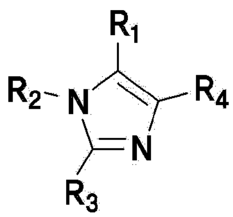

In Formula D,

$R_1$, $R_2$, $R_3$, and $R_4$ may each independently include hydrogen; or an alkyl group having 1 to 5 carbon atoms, a cyano group (CN), an allyl group, a propargyl group, an amine group, a phosphate group, an ether group, a benzene group, a cyclohexyl group, a silyl group, an isocyanate group (-NCO), or a fluorine group (-F).

Preferably, compounds acting as an oxygen scavenger may be used as the additive. For example, materials with a phosphite-based structure (see Formula E) such as tris tri(methylsilyl)phosphite (TMSPi), tris trimethylphosphite (TMPi), and tris(2,2,2-trifluoroethyl)phosphite (TTFP); tris tri(methylsilyl)phosphate (TMSPa); polyphosphoric acid trimethylsilyl ester (PPSE); tris(pentafluorophenyl)borane (TPFPB); compounds including a coumarin structure (see Formula F) such as coumarin-3-carbonitrile (CMCN), 7-ethynylcoumarin (ECM), 3-acetylcoumarin (AcCM), and 3-(trimethylsilyl)coumarin (TMSCM); 3-[(trimethylsilyl)oxyl]-2H-1-benzopyran-2-one (TMSOCM), 3-(2-propyn-1-yloxyl)-2H-1-benzopyran-2-one (POCM), or 2-propyn-1-yl-2-oxo-2H-1-benzopyran-3-carboxylate (OBCM) may be used as the compound acting as the oxygen scavenger.

[Formula E]

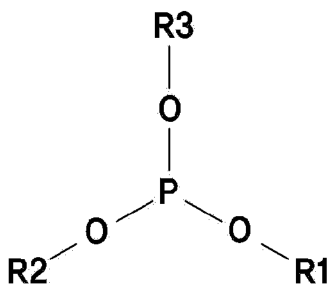

[Formula F]

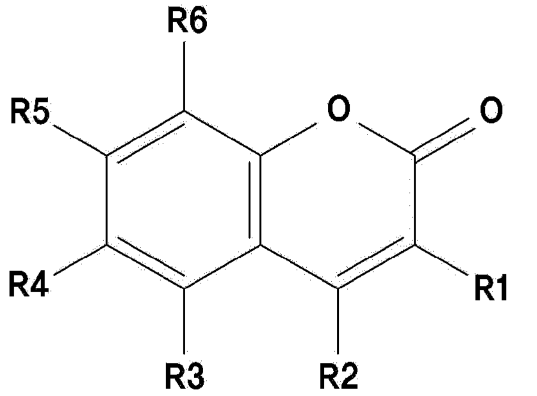

In Formulae E and F, $R_1$ to $R_6$ may each independently include an unsubstituted or substituted alkenyl group having 2 to 20 carbon atoms and an unsubstituted or substituted alkynyl group having 2 to 20 carbon atoms, a cyano group (-CN), a fluoro group (-F), an ether group (C-O-C), a carboxyl group (O-C=O), a trimethylsilyl group (-TMS), an isocyanate group (-NCO), and/or an isothiocyanate group (-NCS).

PREFERRED MODE FOR CARRYING OUT THE INVENTION

Hereinafter, the present invention will be described in more detail through specific examples.

**Example 1**

<Positive Electrode Preparation>

A positive electrode active material:a conductive agent:a PVDF binder were mixed in N-methylpyrrolidone in a weight ratio of 96:1:3 to prepare a positive electrode slurry. In this case, $Li_{1.143}[Ni_{0.35}Mn_{0.65}]_{0.857}O_2$ coated with 1,500 ppm Al was used as the positive electrode active material, and carbon nanotubes were used as the conductive agent.

An aluminum current collector sheet was coated with the positive electrode slurry, dried, and then rolled to prepare a positive electrode having a loading amount of 5.0 $mAh/cm^2$.

<Negative Electrode Preparation>

A negative electrode active material:a conductive agent:a styrene-butadiene rubber (SBR):carboxymethyl cellulose (CMC) were mixed in water in a weight ratio of 96.2:0.8:2:1 to prepare a negative electrode slurry. In this case, $SiO_x$:graphite (Gr) were mixed in a weight ratio of 5.5:94.5 and used as the negative electrode active material, and single-walled carbon nanotubes were used as the conductive agent.

A copper current collector sheet was coated with the negative electrode slurry, dried, and then rolled to prepare a negative electrode having a loading amount of 5.5 $mAh/cm^2$.

<Lithium Secondary Battery Preparation>

A battery cell was prepared by preparing an electrode assembly by disposing a separator between the above-prepared positive electrode and negative electrode, inserting the electrode assembly into a battery case, and then injecting an electrolyte solution. Then, the battery cell was charged at a constant current of 0.1 C to 4.6 V at 45°C and then discharged at a constant current of 0.1 C to 2.0 V to activate a $Li_2MnO_3$ phase of the positive electrode active material to prepare a lithium secondary battery.

**Example 2**

A lithium secondary battery was prepared in the same manner as in Example 1 except that a loading amount of a negative electrode became 6.0 $mAh/cm^2$ during the preparation of the negative electrode.

**Example 3**

A lithium secondary battery was prepared in the same manner as in Example 1 except that $SiO_x$:graphite were mixed in a weight ratio of 10:90 and used as the negative electrode active material during the preparation of the negative electrode.

**Example4**

A lithium secondary battery was prepared in the same manner as in Example 1 except that $Li_{1.167}[Ni_{0.25}Mn_{0.75}]_{0.833}O_2$ coated with 1,500 ppm Al was used as the positive electrode active material during the preparation of the positive electrode.

**Example 5**

A lithium secondary battery was prepared in the same manner as in Example 1 except that the battery cell was charged at a constant current of 0.1 C to 4.7 V at 45°C and then discharged at a constant current of 0.1 C to 2.0 V to activate a $Li_2MnO_3$ phase of the positive electrode active material.

**Comparative Example 1**

A lithium secondary battery was prepared in the same manner as in Example 1 except that a loading amount of a negative electrode became 7.5 mAh/cm$^2$ during the preparation of the negative electrode.

**Comparative Example 2**

A lithium secondary battery was prepared in the same manner as in Example 1 except that the battery cell was charged at a constant current of 0.1 C to 4.9 V at 45°C and then discharged at a constant current of 0.1 C to 2.0 V to activate a $Li_2MnO_3$ phase of the positive electrode active material.

**Comparative Example 3**

A lithium secondary battery was prepared in the same manner as in Example 1 except that $SiO_x$:graphite were mixed in a weight ratio of 15:85 and used as the negative electrode active material during the preparation of the negative electrode.

[Table 1]

| | Positive electrode | | Negative electrode | | Battery |
|---|---|---|---|---|---|
| | Positive electrode active material composition | Loading amount [mAh/cm$^2$] | Weight ratio of $SiO_x$:Gr | Loading amount [mAh/cm$^2$] | N/P ratio |
| Example 1 | $Li_{1.143}[Ni_{0.35}Mn_{0.65}]_{0.857}O_2$ coated with 1,500 ppm Al | 5.0 | 5.5:94.5 | 5.5 | 110 |
| Example 2 | $Li_{1.143}[Ni_{0.35}Mn_{0.65}]_{0.857}O_2$ coated with 1,500 ppm Al | 5.0 | 5.5:94.5 | 6.0 | 120 |
| Example 3 | $Li_{1.143}[Ni_{0.35}Mn_{0.65}]_{0.857}O_2$ coated with 1,500 ppm Al | 5.0 | 10:90 | 5.5 | 110 |
| Example 4 | $Li_{1.167}[Ni_{0.25}Mn_{0.75}]_{0.833}O_2$ coated with 1,500 | 5.0 | 5.5:94.5 | 5.5 | 110 |
| | ppm Al | | | | |
| Example 5 | $Li_{1.143}[Ni_{0.35}Mn_{0.65}]_{0.857}O_2$ coated with 1,500 ppm Al | 5.0 | 5.5:94.5 | 5.5 | 110 |

(continued)

| | Positive electrode | | Negative electrode | | Battery |
|---|---|---|---|---|---|
| | Positive electrode active material composition | Loading amount [mAh/cm$^2$] | Weight ratio of $SiO_x$:Gr | Loading amount [mAh/cm$^2$] | N/P ratio |
| Comparative Example 1 | $Li_{1.143}[Ni_{0.35}Mn_{0.65}]_{0.857}O_2$ coated with 1,500 ppm Al | 5.0 | 5.5:94.5 | 7.5 | 150 |
| Comparative Example 2 | $Li_{1.143}[Ni_{0.35}Mn_{0.65}]_{0.857}O_2$ coated with 1,500 ppm Al | 5.0 | 5.5:94.5 | 5.5 | 110 |
| Comparative Example 3 | $Li_{1.143}[Ni_{0.35}Mn_{0.65}]_{0.857}O_2$ coated with 1,500 ppm Al | 5.0 | 15:85 | 5.5 | 110 |

**Experimental Example 1**

The secondary batteries prepared in the examples and the comparative examples were charged at a constant current of 0.1 C to 4.60 V at 25°C, and discharged at a constant current of 0.1 C to 2.0 V to measure a voltage-discharge capacity graph, and the voltage-capacity graph was differentiated to obtain a dQ/dV graph. Then, in the dQ/dV graph, a discharge curve area A in a voltage range of 2.0 V to 4.6 V and a discharge curve area B in a voltage range of 2.0 V to 3.5 V were measured. Measurement results are presented in Table 2 below.

**Experimental Example 2: The Number of Times Reaching 80% Lifetime**

Charging of the secondary batteries prepared in the examples and the comparative examples at a constant current of 0.33 C to 4.35 V at 25°C and discharging of the secondary batteries at a constant current of 0.33 C to 2.5 V were set as one cycle, and, while charging and discharging were repeated, the number of times that discharge capacity after cycles relative to initial discharge capacity reached 80% was measured. Measurement results are presented in [Table 2] below.

**Experimental Example 3: Energy Density (Unit: Wh/L)**

The secondary batteries prepared in the examples and the comparative examples were charged and discharged at 0.1 C in a voltage range of 4.35 V to 2.5 V at 25°C to measure energy density. In this case, the energy density was calculated by multiplying discharge capacity by an average voltage and then dividing by a unit volume of the secondary battery, and the average voltage was a value obtained by dividing a curve integral value of capacity-voltage profile by the capacity. Measurement results are presented in [Table 2] below.

[Table 2]

| | A (Ah) | B (Ah) | A/B | The number of cycles reaching 80% lifetime | Energy density (Wh/L) |
|---|---|---|---|---|---|
| Example 1 | 34.7 | 14.6 | 0.42 | 653 | 507 |
| Example 2 | 34.7 | 10.4 | 0.30 | 685 | 476 |
| Example 3 | 34.4 | 16.8 | 0.49 | 594 | 540 |
| Example 4 | 34.8 | 13.5 | 0.39 | 595 | 515 |
| Example 5 | 34.7 | 15.7 | 0.45 | 645 | 536 |
| Comparative Example 1 | 34.7 | 8.5 | 0.24 | 557 | 424 |
| Comparative Example 2 | 34.7 | 21.5 | 0.62 | 352 | 497 |
| Comparative Example 3 | 35.1 | 21.9 | 0.62 | 404 | 580 |

As illustrated in [Table 2], with respect to the lithium secondary batteries of Examples 1 to 5 in which the discharge curve area B in a voltage range of 2.0 V to 3.5 V in the dQ/dV graph satisfied 0.25 to 0.6 times the discharge

curve area A in a voltage range of 2.0 V to 4.6 V, the numbers of cycles reaching 80% lifetime were excellent at 590 or more while energy densities of 450 Wh/L or more were achieved. In contrast, with respect to the lithium secondary batteries of Comparative Examples 1 to 3 in which the discharge curve area B in a voltage range of 2.0 V to 3.5 V in the dQ/dV graph was outside the range of the present invention, it may be confirmed that the numbers of cycles reaching 80% lifetime were significantly reduced in comparison to those of Examples 1 to 5.

**Claims**

1. A lithium secondary battery comprising a positive electrode including an overlithiated manganese-based oxide, in which an amount of manganese among total metals excluding lithium is greater than 50 mol% and a ratio (Li/Me) of the number of moles of the lithium to the number of moles of the total metals excluding the lithium is greater than 1, as a positive electrode active material;

   a negative electrode including a silicon-based negative electrode active material;
   a separator disposed between the positive electrode and the negative electrode; and
   an electrolyte, and
   satisfying Equation (1).

$$\text{Equation (1): } 0.25A \le B \le 0.6A$$

   wherein, in Equation (1), A is a discharge curve area in a voltage range of 2.0 V to 4.6 V of a dQ/dV graph obtained by differentiating a graph of battery discharge capacity Q and voltage V after one cycle which are measured while charging the lithium secondary battery at 0.1 C to 4.6 V and discharging the lithium secondary battery at 0.1 C to 2.0 V, and B is a discharge curve area in a voltage range of 2.0 V to 3.5 V of the dQ/dV graph.

2. The lithium secondary battery of claim 1, wherein the lithium secondary battery satisfies Equation (1-1).

$$\text{Equation (1-1): } 0.3A \le B \le 0.5A$$

   wherein, in Equation (1-1), A is a discharge curve area in a voltage range of 2.0 V to 4.6 V of a dQ/dV graph obtained by differentiating a graph of battery discharge capacity Q and voltage V after one cycle which are measured while charging the lithium secondary battery at 0.1 C to 4.6 V and discharging the lithium secondary battery at 0.1 C to 2.0 V, and B is a discharge curve area in a voltage range of 2.0 V to 3.5 V of the dQ/dV graph.

3. The lithium secondary battery of claim 1, wherein the overlithiated manganese-based oxide is represented by [Formula 1].

   [Formula 1] $Li_aNi_bCo_cMn_dM_eO_2$

   wherein, in Formula 1, $1<a$, $0\le b\le 0.5$, $0\le c\le 0.1$, $0.5\le d<1.0$, and $0\le e\le 0.2$, and M is at least one selected from the group consisting of aluminum (Al), boron (B), cobalt (Co), tungsten (W), magnesium (Mg), vanadium (V), titanium (Ti), zinc (Zn), gallium (Ga), indium (In), ruthenium (Ru), niobium (Nb), tin (Sn), strontium (Sr), and zirconium (Zr).

4. The lithium secondary battery of claim 3, wherein, in Formula 1, $1.1\le a\le 1.5$, $0.1\le b\le 0.4$, $0\le c\le 0.05$, $0.5\le d\le 0.80$, and $0\le e\le 0.1$.

5. The lithium secondary battery of claim 1, wherein the positive electrode active material has a $D_{50}$ of 2 $\mu$m to 10 $\mu$m.

6. The lithium secondary battery of claim 1, wherein the positive electrode active material has a Brunauer-Emmett-Teller (BET) specific surface area of 1 $m^2/g$ to 10 $m^2/g$.

7. The lithium secondary battery of claim 1, wherein the positive electrode has an initial irreversible capacity of 5% to 70%.

8. The lithium secondary battery of claim 1, wherein the positive electrode has an electrode density of 2.5 g/cc to 3.8 g/cc.

9. The lithium secondary battery of claim 1, wherein the silicon-based negative electrode active material has an initial efficiency of 60% to 95%.

10. The lithium secondary battery of claim 1, wherein the negative electrode active material layer further comprises a conductive agent and a binder,
wherein the conductive agent comprises single-walled carbon nanotubes.

11. The lithium secondary battery of claim 1, wherein the silicon-based negative electrode active material has a $D_{50}$ of 3 $\mu$m to 8 $\mu$m.

12. The lithium secondary battery of claim 1, wherein the negative electrode active material layer has a porosity of 20% to 70%.

13. The lithium secondary battery of claim 1, wherein the negative electrode active material is a mixture of a silicon oxide and a carbon-based negative electrode active material, and
an N/P ratio of the lithium secondary battery is in a range of 100% to 150%.

14. The lithium secondary battery of claim 13, wherein the negative electrode has a multilayer structure including two or more negative electrode material mixture layers.

15. The lithium secondary battery of claim 1, wherein the negative electrode active material is formed of silicon (Si), and an N/P ratio of the lithium secondary battery is in a range of 150% to 300%.

16. The lithium secondary battery of claim 1, wherein the lithium secondary battery has the number of times reaching 80% lifetime of 560 times or more, and has an energy density of 450 Wh/L or more.

[FIG.1]

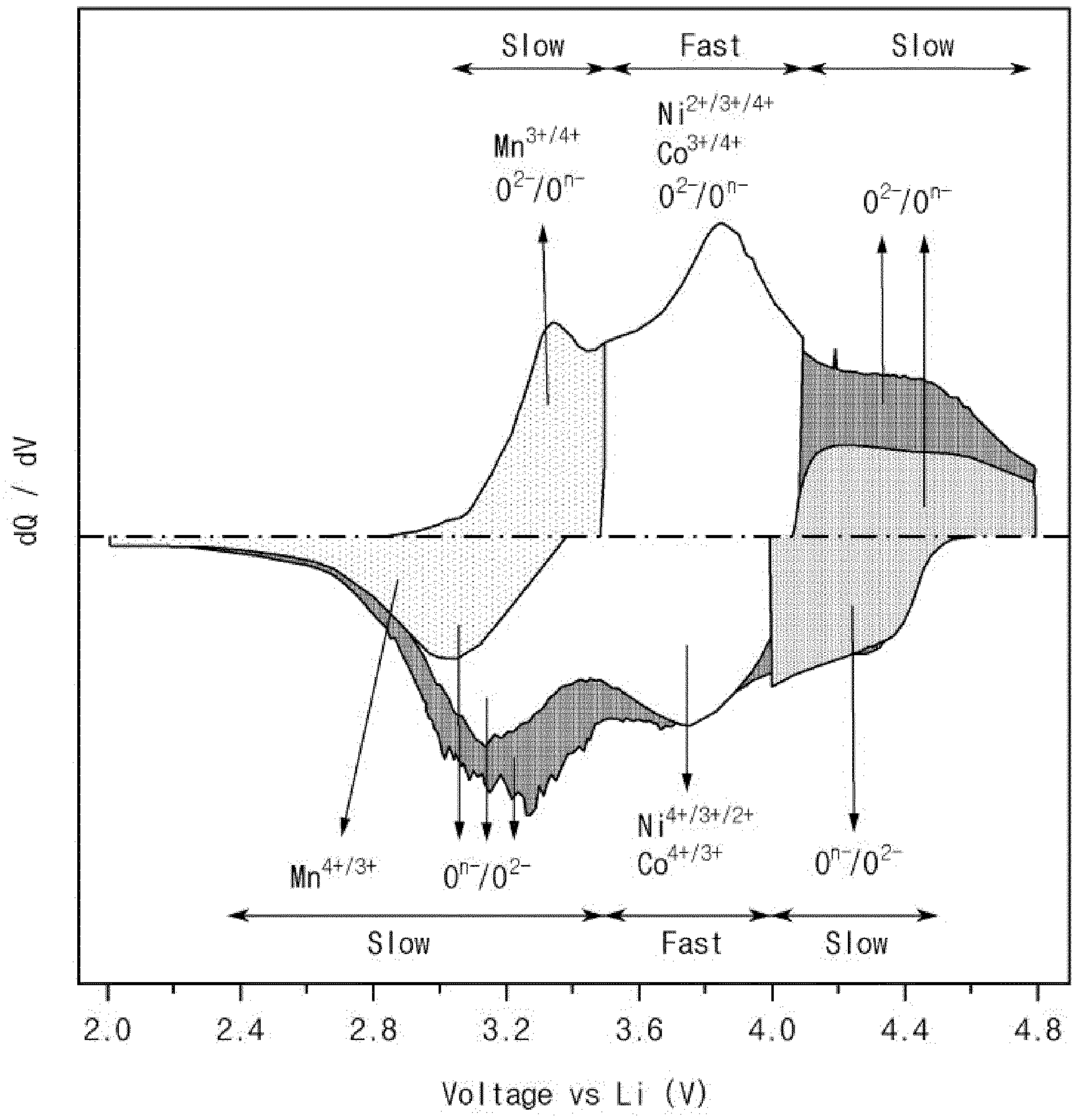
Slow
Fast
Slow
Mn3+/4+
O2-/On-
Ni2+/3+/4+
Co3+/4+
O2-/On-
O2-/On-
dQ / dV
Mn4+/3+
On-/O2-
Ni4+/3+/2+
Co4+/3+
On-/O2-
Slow
Fast
Slow
2.0
2.4
2.8
3.2
3.6
4.0
4.4
4.8
Voltage vs Li (V)

[FIG.2]

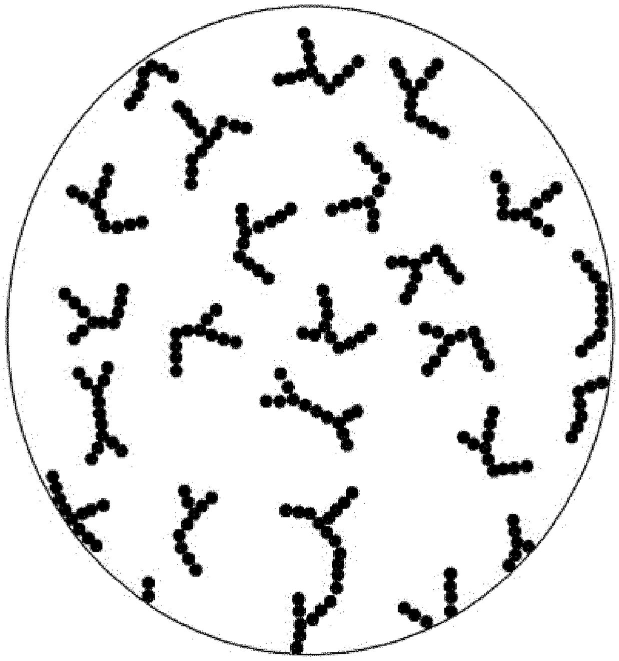

[FIG.3]

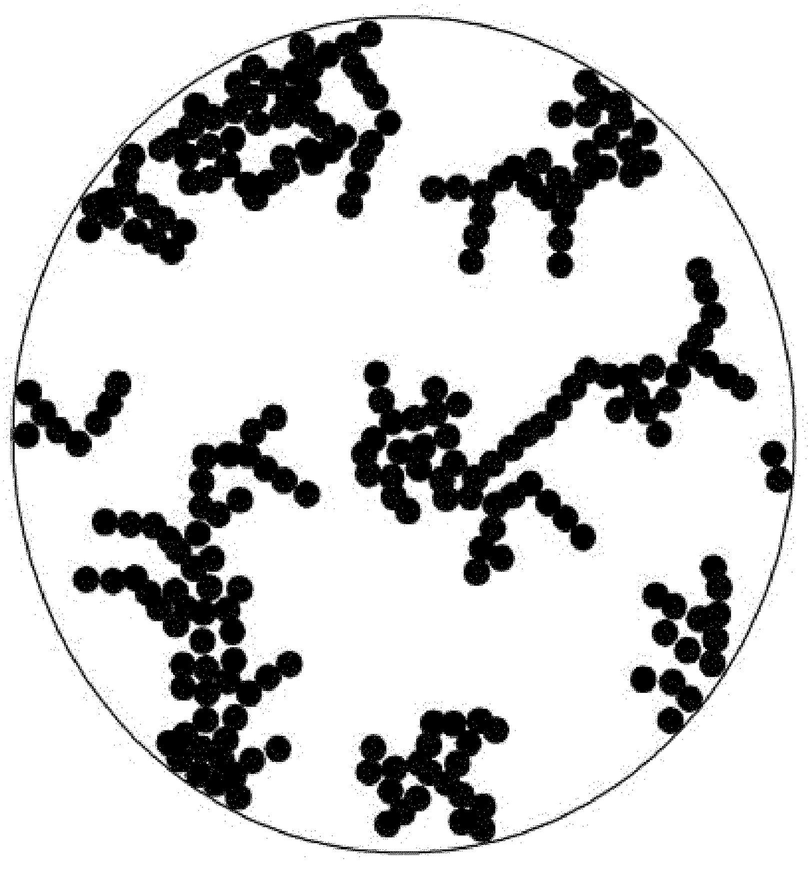

## INTERNATIONAL SEARCH REPORT

International application No. **PCT/KR2022/015005**

**A. CLASSIFICATION OF SUBJECT MATTER**

**H01M 10/052**(2010.01)i; **H01M 4/505**(2010.01)i; **H01M 4/525**(2010.01)i; **H01M 10/44**(2006.01)i; **H01M 4/48**(2010.01)i; **H01M 4/38**(2006.01)i

According to International Patent Classification (IPC) or to both national classification and IPC

**B. FIELDS SEARCHED**

Minimum documentation searched (classification system followed by classification symbols)

H01M 10/052(2010.01); H01M 10/0525(2010.01); H01M 10/42(2006.01); H01M 4/131(2010.01); H01M 4/1315(2010.01); H01M 4/485(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 양극 활물질(positive electrode active material), 과리튬 망간계 산화물(lithium-rich manganese-based oxide), 음극 활물질(negative electrode active material), 실리콘계 물질(silicon-based material), 산소-산화환원 반응(oxygen-redox), 리튬 이차전지(lithium secondary battery)

**C. DOCUMENTS CONSIDERED TO BE RELEVANT**

| Category* | Citation of document, with indication, where appropriate, of the relevant passages | Relevant to claim No. |
|---|---|---|
| Y | ASSAT, G. et al. Fundamental interplay between anionic/cationic redox governing the kinetics and thermodynamics of lithium-rich cathodes. Nature communications. 2017, vol. 8, no. 1, document no. 2219 (inner pp. 1-12). See inner page 2, Anionic/cationic charge-compensation mechanism section; inner page 10, Ex situ sample preparation section and inner page 11, Detailed electrochemical tests section; and figure 7. | 1-16 |
| Y | US 2020-0411901 A1 (ZENLABS ENERGY, INC.) 31 December 2020 (2020-12-31) See paragraphs [0011], [0057], [0105], [0109]-[0111], [0117], [0127], [0158] and [0181]-[0183]. | 1-16 |
| Y | KR 10-2014-0108102 A (SAMSUNG SDI CO., LTD.) 05 September 2014 (2014-09-05) See claims 1 and 11; and paragraphs [0033]-[0037] and [0120]. | 5,6 |
| Y | KR 10-2019-0134064 A (LG CHEM, LTD.) 04 December 2019 (2019-12-04) See claims 1, 5 and 13; paragraphs [0008] and [0154]; and table 1. | 9,11 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **12 January 2023** | **12 January 2023** |

| Name and mailing address of the ISA/KR | Authorized officer |
|---|---|
| **Korean Intellectual Property Office Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.
**PCT/KR2022/015005**

**C. DOCUMENTS CONSIDERED TO BE RELEVANT**

| Category* | Citation of document, with indication, where appropriate, of the relevant passages | Relevant to claim No. |
|---|---|---|
| Y | KR 10-2020-0089182 A (LG CHEM, LTD.) 24 July 2020 (2020-07-24)<br>See claims 1 and 11; paragraphs [0035], [0040], [0041], [0076] and [0080]; and example 1. | 13-15 |

Form PCT/ISA/210 (second sheet) (July 2022)

**INTERNATIONAL SEARCH REPORT**
**Information on patent family members**

International application No.
**PCT/KR2022/015005**

| Patent document cited in search report | Publication date (day/month/year) | Patent family member(s) | Publication date (day/month/year) |
|---|---|---|---|
| US 2020-0411901 A1 | 31 December 2020 | CN 112151788 A | 29 December 2020 |
| | | EP 3991221 A1 | 04 May 2022 |
| | | JP 2022-539724 A | 13 September 2022 |
| | | KR 10-2022-0026587 A | 04 March 2022 |
| | | TW 202109947 A | 01 March 2021 |
| | | WO 2020-263709 A1 | 30 December 2020 |
| KR 10-2014-0108102 A | 05 September 2014 | CN 104037397 A | 10 September 2014 |
| | | CN 104037397 B | 16 February 2018 |
| | | EP 2772968 A1 | 03 September 2014 |
| | | EP 2772968 B1 | 30 November 2016 |
| | | JP 2014-170739 A | 18 September 2014 |
| | | JP 6320771 B2 | 09 May 2018 |
| | | KR 10-1771086 B1 | 05 September 2017 |
| | | US 2014-0242468 A1 | 28 August 2014 |
| | | US 9570739 B2 | 14 February 2017 |
| KR 10-2019-0134064 A | 04 December 2019 | CN 111095626 A | 01 May 2020 |
| | | EP 3675252 A1 | 01 July 2020 |
| | | KR 10-2260425 B1 | 02 August 2021 |
| | | US 2020-0274147 A1 | 27 August 2020 |
| | | WO 2019-225879 A1 | 28 November 2019 |
| KR 10-2020-0089182 A | 24 July 2020 | None | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020210131945
- KR 1020220127208